# FASCICULE DE BREVET EUROPEEN

(11) **EP 1 457 395 B1**
(45) Date de publication et mention de la délivrance du brevet: **22.08.2007**
(21) Numéro de dépôt: 04290359.1
(22) Date de dépôt: 11.02.2004
(51) Int. Cl.: B60R 21/34, B62D 25/08

(54) **Dispositif de liaison et d'étanchéité entre le parebrise et le capot d'un véhicule automobile muni d'une zone sécable en cas de choc**
Verbindungs- und Abdichtungselement zwischen der Windschutzscheibe und der Motorhaube eines Kraftfahrzeugs mit Sollbruchstelle
Connecting and sealing element between the windshield and the bonnet with predetermined breaking point

(30) Priorité: 04.03.2003 FR 0302634
(43) Date de publication de la demande: 15.09.2004
(73) Titulaire: Möllertech, 91370 Verrieres le Buisson (FR)
(72) Inventeur: Chausset, Francois, 36250 Saint Maur (FR)
(74) Mandataire: Thinat, Michel

(56) Documents cités:
- EP-A- 1 029 721
- EP-A- 1 277 630

## Description

L'invention concerne en général les véhicules automobiles.

Plus précisément, l'invention concerne un dispositif de liaison et d'étanchéité entre le pare-brise et le capot d'un véhicule automobile, comprenant une grille d'auvent transversale fixée de façon étanche par un bord arrière à un bord inférieur du pare-brise et présentant un bord avant disposé sous une partie arrière du capot quand celui-ci est en position fermée, et une traverse transversale supportant le bord avant de la grille d'auvent et fixée à la carrosserie du véhicule.

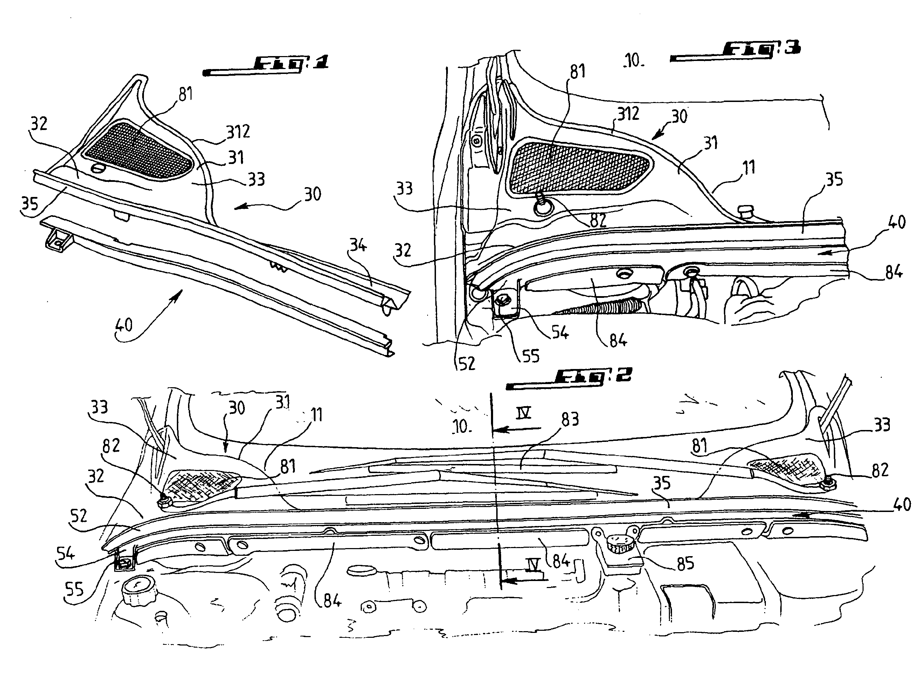

Des dispositifs de ce type sont connus de l'art antérieur. L'un d'eux est représenté sur la figure 1.

La grille d'auvent d'un tel dispositif a plusieurs fonctions.

Elle assure d'abord l'étanchéité à l'eau et aux différents éléments extérieurs tels que feuilles d'arbres, papiers, entre le pare-brise et la partie arrière du capot moteur. Elle oriente les flux d'air qui permettent de chasser ces éléments extérieurs. Elle passe également sous le capot et assure la liaison technique et esthétique avec celui-ci. Enfin, elle intègre des fonctions techniques d'accès au filtre à pollen et de support du réservoir de liquide lave-vitre et/ou du moteur d'essuie-glace.

La grille d'auvent est, dans l'art antérieur, fixée positivement par des clips et des vis, tant sur le pare-brise que sur la carrosserie et la traverse. Cette traverse est elle aussi fixée sur la carrosserie.

En cas de choc piéton sur l'avant du véhicule, le piéton vient s'écraser sur une zone d'impact située sur la partie arrière du capot, sous laquelle s'étend la grille d'auvent.

EP 1029721 décrit un dispositif de liaison et d'étanchéité selon le préambule de la revendication 1.

Dans ce contexte, la présente invention a pour but de proposer un dispositif de liaison et d'étanchéité permettant d'augmenter la sécurité des piétons en cas de choc sur l'avant du véhicule.

A cette fin, le dispositif de l'invention, par ailleurs conforme à la définition générique qu'en donne le préambule ci-dessus, est essentiellement caractérisé en ce que la traverse présente au moins une zone sécable qui se rompt en cas d'impact sur la partie arrière du capot avec une énergie supérieure à une valeur prédéterminée.

Dans un mode de réalisation possible de l'invention, la traverse est une pièce creuse comprenant des parois en matière plastique moulée, la zone sécable comprenant des parois d'épaisseurs réduites relativement aux zones adjacentes à ladite zone sécable.

Avantageusement, la traverse est constituée d'une partie droite et d'une partie gauche mutuellement assemblées par emboîtement.

De préférence, la partie droite comprend un support droit transversal fixé à la carrosserie par une extrémité droite et une partie d'extrémité mâle solidaire d'une extrémité du support droit opposée à l'extrémité droite, et la partie gauche comprenant un support gauche transversal fixé à la carrosserie par une extrémité gauche et une partie d'extrémité femelle solidaire du support gauche par une extrémité opposée à l'extrémité gauche, la partie d'extrémité mâle étant engagée dans la partie d'extrémité femelle.

Par exemple, la partie d'extrémité mâle est verrouillée dans la partie d'extrémité femelle par un clip.

Avantageusement, la zone sécable est située à l'interface entre la partie d'extrémité mâle et le support droit.

De préférence, la partie d'extrémité mâle est creuse, la zone sécable comprenant une gorge périphérique creusée dans la partie d'extrémité mâle.

Par exemple, les supports gauche et droit sont chacun constitué d'un profilé transversal en U et d'entretoises disposées à l'intérieur du U.

Avantageusement, les parties droite et gauche comprennent chacune une proéminence faisant saillie vers l'avant et supportant la grille d'auvent.

De préférence, les parties d'extrémité mâle et femelle présentent des sections trapézoïdales perpendiculairement à la direction transversale.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'une partie un dispositif selon l'art antérieur,
- la figure 2 est une vue partielle en perspective d'un véhicule montrant l'implantation du dispositif de l'invention,
- la figure 3 est une vue en perspective agrandie d'une partie de la figure 2,
- la figure 4 est une vue en coupe, selon l'incidence des flèches IV de la figure 2,
- la figure 5 est une vue en perspective de la traverse de la figure 2, les parties gauche et droite de la traverse étant assemblées,
- la figure 6 est une vue en perspective de la traverse de la figure 2, les parties gauche et droite de la traverse étant désassemblées,
- les figures 7A et 7B sont des vues agrandies, en perspective, des détails VIIA et VIIB de la figure 6,
- la figure 8 est une vue en coupe verticale, suivant l'incidence des flèches VIII de la figure 4,
- la figure 9 est une vue en coupe horizontale, suivant l'incidence des flèches IX de la figure 4, et
- la figure 10 est une vue agrandie du détail X de la figure 8.

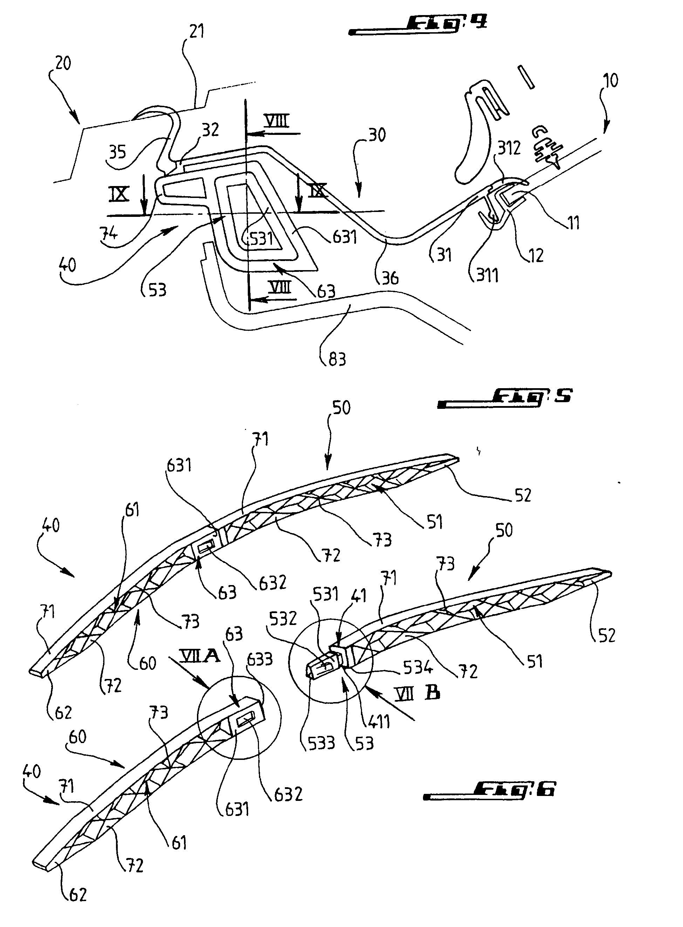

Le dispositif de liaison et d'étanchéité entre le pare-brise 10 et le capot 20 représenté sur la figure 2 comprend une grille d'auvent 30 transversale fixée de façon étanche par un bord arrière 31 à un bord inférieur 11 du pare-brise 10 et présentant un bord avant 32 disposé sous une partie arrière 21 du capot 20 quand celui-ci est en position fermée, et une traverse transversale 40 supportant le bord avant 32 de la grille d'auvent 30 et fixée à la carrosserie du véhicule

La grille d'auvent 30 comporte deux médaillons latéraux 33 disposés des deux côtés latéraux opposés du véhicule, réunis par un profilé transversal 34. Les médaillons 33 et le profilé 34 forment une pièce unique, réalisée en une matière thermoplastique, et injectée d'une seule pièce.

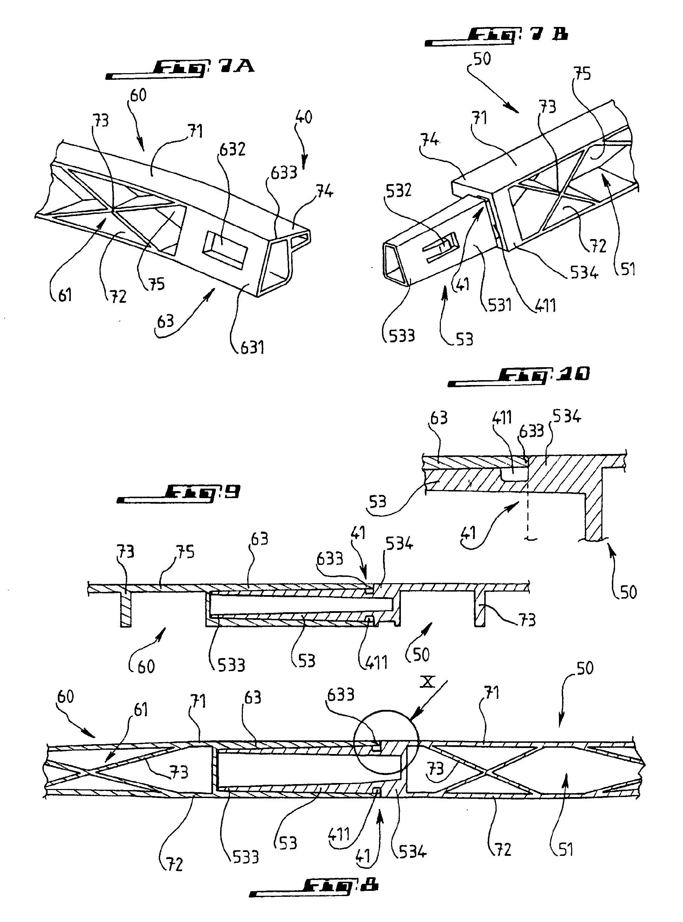

Comme le montrent les figures 1 à 3, les médaillons 33 présentent chacun une forme générale de triangle rectangle, présentant un bord transversal, un bord longitudinal situé du côté extérieur du véhicule et perpendiculaire au bord transversal, et un bord oblique réunissant les deux autres formant l'hypoténuse du triangle.

Le profilé transversal 34 est aligné avec et réunit les bords transversaux respectifs des deux médaillons 33, de telle sorte que ces bords transversaux et une partie du profilé transversal 34 forment le bord avant 32 de la grille d'auvent 30.

Les bords obliques et une autre partie du profilé transversal 34 forment le bord arrière 31 de la grille d'auvent 30.

Les médaillons 33 supportent les trappes d'accès aux filtres à pollen 81. Les moteurs des essuie-glaces sont disposés sous les médaillons 33, les axes d'entraînement 82 des balais 83 traversant ces médaillons et faisant saillie vers le haut.

La traverse 40 s'étend d'un côté latéral à l'autre du véhicule et est fixée à la carrosserie à deux extrémités latérales opposées. Elle est disposée sous le bord avant 32 de la grille d'auvent 30. Elle présente une forme légèrement recourbée, de convexité tournée vers l'avant.

Différents éléments sont fixés d'un côté avant de la traverse 40, tels qu'un écran acoustique 84 et un réservoir de liquide lave vitre 85.

Selon l'invention, la traverse 40 présente au moins une zone sécable 41 qui se rompt en cas d'impact sur la partie arrière 21 du capot 20 avec une énergie supérieure à une valeur prédéterminée.

La valeur de l'énergie provoquant la rupture est prescrite par les normes, françaises ou européennes, ou déterminée par le constructeur du véhicule automobile.

Plus précisément, la traverse 40 est une pièce creuse comprenant des parois en matière plastique moulée, la zone sécable 41 comprenant des parois d'épaisseurs réduites relativement aux zones adjacentes à ladite zone frangible, comme on peut le voir par exemple sur la figure 10.

On crée ainsi une zone de fragilité qui se rompt de façon préférentielle en cas de choc.

Dans le mode de réalisation de l'invention représenté sur les figures 4 à 10, la traverse 40 est constituée d'une partie droite 50 et d'une partie gauche 60 assemblées par emboîtement. L'emboîtement se fait de préférence au milieu de la traverse 40. Il peut également être réalisé en d'autres points de la traverse 40.

La partie droite 50 comprend un support droit 51, transversal, fixé à la carrosserie par une extrémité droite 52, et une partie d'extrémité mâle 53 solidaire d'une extrémité du support droit 51 opposée à l'extrémité droite 52.

Le support droit 51 présente la forme d'une poutrelle s'étendant transversalement. La partie droite 50 comprend une patte de fixation 54 solidaire de l'extrémité droite 52 du support et fixée sur la carrosserie par une vis 55.

La partie d'extrémité mâle 53 s'étend transversalement, dans le prolongement du support droit 51, vers le support gauche 61.

De même, la partie gauche 60 comprend un support gauche 61 transversal fixé à la carrosserie par une extrémité gauche 62, et une partie d'extrémité femelle 63 solidaire du support gauche 61 par une extrémité opposée à l'extrémité gauche 62.

Le support gauche 61 présente la forme d'une poutrelle s'étendant transversalement. La partie gauche 60 comprend une autre patte de fixation solidaire de l'extrémité gauche 62 du support et fixée sur la carrosserie par une vis.

La partie d'extrémité femelle 63 s'étend transversalement, dans le prolongement du support gauche 61, vers le support droit 51.

Comme on le voit sur les figures 5 et 6, les parties d'extrémité mâle et femelle 53 et 63 présentent des formes complémentaires, la partie d'extrémité mâle 53 étant engagée dans la partie d'extrémité femelle 63, réalisant ainsi l'emboîtement des parties droite et gauche 50 et 60.

En outre, la partie d'extrémité mâle 53 est verrouillée dans la partie d'extrémité femelle 63 par un clip.

A cet effet, la partie d'extrémité femelle 63 présente une face arrière plane 631 et une ouverture 632 percée dans la face arrière plane 631. La partie d'extrémité mâle 53 comprend une face complémentaire 531 venant en regard de la face arrière plane 631 quand la partie d'extrémité mâle est engagée dans la partie d'extrémité femelle, et une languette 532 solidaire de la face complémentaire 531 par une extrémité de liaison et dont une extrémité de blocage opposée à l'extrémité de liaison fait saillie par rapport à ladite face complémentaire.

Quand la partie d'extrémité mâle est engagée dans la partie d'extrémité femelle, l'extrémité de blocage de la languette 532 est engagée dans l'ouverture 632.

On notera que la languette 532 s'étend transversalement, l'extrémité de liaison étant relativement plus éloignée du support droit et l'extrémité de blocage relativement plus proche de ce support, de sorte que l'extrémité de blocage empêche la partie d'extrémité mâle 53 de se dégager de la partie d'extrémité femelle 63.

Le déblocage peut être réalisé en appuyant à travers l'ouverture 632 sur l'extrémité de blocage, de telle sorte que la languette pivote élastiquement autour de son extrémité de liaison jusqu'à ce que l'extrémité de blocage soit totalement escamotée de l'ouverture 632.

Quand la partie d'extrémité mâle 53 est engagée dans la partie d'extrémité femelle 63, une extrémité libre mâle 533 de la partie d'extrémité mâle 53 vient en butée au fond de la partie d'extrémité femelle 63. Réciproquement, une extrémité libre femelle 633 de la partie d'extrémité femelle 63 vient en butée sur un épaulement périphérique 534 ménagé sur la partie d'extrémité mâle 53 à proximité immédiate du support droit 51.

Comme le montrent les figures 7 à 10, la zone sécable 41 est située à l'interface entre la partie d'extrémité mâle 53 et le support droit 51.

Plus précisément, la partie d'extrémité mâle 53 est creuse, et présente une section sensiblement trapézoïdale dans un plan perpendiculaire à la direction transversale. Elle est délimitée par une paroi dont l'épaisseur croît de l'extrémité libre mâle 533 de la partie d'extrémité mâle 53 vers le support droit 51. Cette épaisseur est maximale à l'interface entre la partie d'extrémité mâle 53 et le support droit 51.

Comme le montre la figure 10, la zone sécable 41 comprend une gorge périphérique 411 creusée dans la paroi de la partie d'extrémité mâle 53, au pied de l'épaulement 534. La gorge 411 est recouverte par l'extrémité libre femelle 633 quand la partie d'extrémité mâle 53 est engagée dans la partie d'extrémité femelle 63.

Le profil et les dimensions de la gorge 411 sont déterminés par calcul, au cas par cas, en fonction des caractéristiques géométriques et mécaniques du capot 20, de la grille d'auvent 30 et de la traverse 40, et en fonction de la valeur de l'énergie pour laquelle la traverse 40 doit se rompre en cas de choc.

Les calculs sont ensuite validés par des essais dynamiques.

Dans l'exemple de réalisation représenté sur les figures 4 à 10, la paroi de la partie d'extrémité mâle 53 présente, à l'interface avec le support droit 51, une épaisseur de 3 millimètres environ, l'épaulement 534 constituant une surépaisseur de 1,5 millimètres supplémentaire. L'épaisseur de la paroi à l'extrémité libre mâle 533 est de 1,5 millimètre environ.

La paroi de la partie d'extrémité femelle 63 présente, à l'interface avec le support gauche 61, une épaisseur de 3 millimètres environ, et va décroissant vers l'extrémité libre femelle 633, où elle est de 1,5 millimètres environ.

La gorge 411 présente un profil rectangulaire, de profondeur sensiblement égale à 1,5 millimètres et de largeur égale à 5 millimètres.

Les parties d'extrémité mâle et femelle présentent des longueurs transversales de 100 millimètres environ.

Comme le montre la figure 4, les parties d'extrémité mâle 53 et femelle 63 présentent des sections perpendiculaires à la direction transversale qui vont en s'évasant vers le bas. La section de la partie d'extrémité femelle 63 présente une hauteur d'environ 35 millimètres, et une largeur variant approximativement entre 15 millimètre en haut et 30 millimètre en bas.

Comme on le voit sur les figures 5 et 6, les supports droit 51 et gauche 61 sont chacun constitué d'une paroi supérieure 71, d'une paroi inférieure 72 opposée à la paroi supérieure 71, d'entretoises 73 solidarisant les parois inférieure et supérieure 72 et 71 et d'une paroi avant 75 solidarisant également les parois supérieure et inférieure 71 et 72. Les parois inférieure et supérieure 72 et 71 sont transversales, parallèles et s'étendent sur toute la longueur des supports. La paroi avant 75 est transversale et verticale. Les parois avant, supérieure et inférieure 75, 72 et 71 forment un profilé transversal en U ouvert vers l'arrière, les entretoises 73 étant disposées à l'intérieur du U. Les entretoises 73 sont en X.

L'épaulement 534 de la partie d'extrémité mâle 53 et la paroi de la partie d'extrémité femelle 63 assurent une parfaite continuité entre les parois supérieures 71 respectives des supports droit et gauche 51 et 61, et entre les parois inférieures 72 et avant 75 respectives de ces mêmes supports.

On voit nettement sur les figures 4 et 7 que les parties droite et gauche 50 et 60 comprennent chacune une proéminence 74 prolongeant leurs parois supérieures 71 respectives et supportant la grille d'auvent 30.

Cette proéminence 74 est creuse et fait saillie vers l'avant de la traverse 40.

Les proéminences 74 des parties droite et gauche 50 et 60 sont disposées dans le prolongement l'une de l'autre et s'étendent le long de toute la traverse 40.

Comme le montre la figure 4, la grille d'auvent 30 porte sur son bord avant un joint 35 se dressant vers le haut et venant en contact avec une face intérieure du capot 20 quand celui-ci est fermé.

La grille d'auvent 30 comprend également une partie 36 présentant un profil en V perpendiculairement à la direction transversale, disposée entre le pare-brise 10 et le capot 20, et servant de gouttière pour évacuer l'eau ruisselant du pare-brise 10. Une aile arrière de la partie en V 36 s'étend sous le pare-brise 10, dans le prolongement de celui-ci.

On notera que le bord arrière 31 de la grille d'auvent 30 est clipé par des pattes 311 dans une pièce intermédiaire 12 solidaire du bord inférieur 11 du pare-brise 10, et porte un joint arrière 312 plaqué sur le pare-brise et assurant l'étanchéité avec celui-ci.

Dans une variante de réalisation non représentée, la traverse peut comprendre plusieurs zones sécables réparties à distance les unes des autres.

On conçoit donc bien que, au cas où un piéton tombe sur la partie arrière du capot 20, celui-ci fléchit et vient porter sur la grille d'auvent 30, cette grille d'auvent fléchissant à son tour de telle sorte que la zone sécable de la traverse cède.

L'énergie de l'impact du piéton sur le capot est absorbée par la déformation plastique du capot et de la grille d'auvent.

La disposition de la zone sécable au centre de la traverse est particulièrement adéquate car c'est à cet endroit que le fléchissement de la grille d'auvent est le plus fort.

Enfin, il est particulièrement adéquat de localiser la zone sécable entre la partie d'extrémité mâle et le support droit du fait de la construction géométrique de la partie d'extrémité mâle.

## Revendications

1. Dispositif de liaison et d'étanchéité entre le pare-brise (10) et le capot (20) d'un véhicule automobile, comprenant une grille d'auvent (30) transversale fixée de façon étanche par un bord arrière (31) à un bord inférieur (11) du pare-brise (10) et présentant un bord avant (32) disposé sous une partie arrière (21) du capot (20) quand celui-ci est en position fermée, et une traverse (40) transversale supportant le bord avant (32) de la grille d'auvent (30) et fixée à la carrosserie du véhicule , **caractérisé en ce que** la traverse (40) présente au moins une zone sécable (41) qui se rompt en cas d'impact sur la partie arrière (21) du capot (20) avec une énergie supérieure à une valeur prédéterminée.

2. Dispositif selon la revendication 1, **caractérisé en ce que** la traverse (40) est une pièce creuse comprenant des parois en matière plastique moulée, la zone sécable (41) comprenant des parois d'épaisseurs réduites relativement aux zones adjacentes à ladite zone sécable.

3. Dispositif selon la revendication 1 ou 2, **caractérisé en ce que** la traverse (40) est constituée d'une partie droite (50) et d'une partie gauche (60) mutuellement assemblées par emboîtement.

4. Dispositif selon la revendication 3, **caractérisé en ce que** la partie droite (50) comprend un support droit (51) transversal fixé à la carrosserie par une extrémité droite (52) et une partie d'extrémité mâle (53) solidaire d'une extrémité du support droit (51) opposée à l'extrémité droite (52), et la partie gauche (60) comprenant un support gauche (61) transversal fixé à la carrosserie par une extrémité gauche (62) et une partie d'extrémité femelle (63) solidaire du support gauche (61) par une extrémité opposée à l'extrémité gauche (62), la partie d'extrémité mâle (53) étant engagée dans la partie d'extrémité femelle (63) .

5. Dispositif selon la revendication 4, **caractérisé en ce que** la partie d'extrémité mâle (53) est verrouillée dans la partie d'extrémité femelle (63) par un clip.

6. Dispositif selon la revendication 4 ou 5, **caractérisé en ce que** la zone sécable (41) est située à l'interface entre la partie d'extrémité mâle (53) et le support droit (51).

7. Dispositif selon l'une quelconque des revendications 4 à 6, **caractérisé en ce que** la partie d'extrémité mâle (53) est creuse, la zone sécable (41) comprenant une gorge périphérique (411) creusée dans la partie d'extrémité mâle.

8. Dispositif selon l'une quelconque des revendications 4 à 7, **caractérisé en ce que** les supports gauche et droit (61, 51) sont chacun constitué d'un profilé transversal en U et d'entretoises (73) disposées à l'intérieur du U.

9. Dispositif selon la revendication 8, **caractérisé en ce que** les parties droite et gauche (50, 60) comprennent chacune une proéminence (74) faisant saillie vers l'avant et supportant la grille d'auvent (30).

10. Dispositif selon l'une quelconque des revendications 4 à 9, **caractérisé en ce que** les parties d'extrémité mâle et femelle (53, 63) présentent des sections trapézoïdales perpendiculairement à la direction transversale.

## Claims

1. A connecting and sealing device between the windshield (10) and the bonnet (20) of a motor vehicle, comprising a transverse cowl vent grille (30) sealably attached by a rear edge (31) to a lower edge (11) of the windshield (10) and having a front edge (32) positioned under a rear portion (21) of the bonnet (20) when the latter is in a closed position, and a transverse crosspiece (40) supporting the front edge (32) of the cowl vent grille (30) and attached to the body of the vehicle, **characterized in that** the crosspiece (40) has at least one breakable area (41) which breaks in the case of an impact on the rear portion (21) of the bonnet (20) with an energy larger than a predetermined value.

2. The device according to claim 1, **characterized in that** the crosspiece (40) is a hollow part comprising walls in molded plastic, the breakable area (41) comprising walls with reduced thicknesses relatively to the areas adjacent to said breakable area.

3. The device according to claim 1 or 2, **characterized in that** the crosspiece (40) consists of a right portion (50) and of a left portion (60) assembled by fitting into each other.

4. The device according to claim 3, **characterized in that** the right portion (50) comprises a transverse right support (51) attached to the body by a right end (52) and a male end portion (53) integral with an end of the right support (51) opposite to the right end (52), and the left portion (60) comprising a transverse left support (61) attached to the body by a left end (62) and a female end portion (63) integral with the left support (61) by an end opposite to the left end (62), the male end portion (53) being engaged into the female end portion (63).

5. The device according to claim 4, **characterized in that** the male end portion (53) is locked in the female end portion (63) by a clip.

6. The device according to claim 4 or 5, **characterized in that** the breakable area (41) is located at the interface between the male end portion (53) and the right support (51).

7. The device according to any of claims 4 to 6, **characterized in that** the male end portion (53) is hollow, the breakable area (41) comprising a peripheral groove (411) cut out in the male end portion.

8. The device according to any of claims 4 to 7, **characterized in that** the left and right supports (61, 51) each consist of a transverse U-profile and of spacers (73) positioned inside the U.

9. The device according to claim 8, **characterized in that** the right and left portions (50, 60) each comprise a protrusion (74) projecting forwards and supporting the cowl vent grille (30).

10. The device according to any of claims 4 to 9, **characterized in that** the male and female end portions (53, 63) have trapezoidal sections perpendicularly to the transverse direction.

## Patentansprüche

1. Verbindungs- und Abdichtungselement zwischen der Windschutzscheibe (10) und der Motorhaube (20) eines Kraftfahrzeugs, ein transversales Windlaufgitter (30) umfassend, das durch einen hinteren Rand (31) an einem unteren Rand (11) der Windschutzscheibe (10) abdichtend befestigt ist und einen vorderen Rand (32) aufweist, der unter einem hinteren Teil (21) der Motorhaube (20) angeordnet ist, wenn diese in geschlossener Stellung ist, und einen transversalen Querträger (40), der den vorderen Rand (32) des Windlaufgitters (30) trägt und an der Karosserie des Fahrzeugs befestigt ist, **dadurch gekennzeichnet, dass** der Querträger (40) mindestens eine Sollbruchstelle (41) aufweist, die bei einem Aufprall auf den hinteren Teil (21) der Motorhaube (20) mit einer Energie über einem vorbestimmten Wert zerbricht.

2. Element nach Anspruch 1, **dadurch gekennzeichnet, dass** der Querträger (40) ein Hohlteil ist, das Wände aus geformtem Kunststoffmaterial umfasst, wobei die Sollbruchstelle (41) in Bezug auf die zur besagten Sollbruchstelle benachbarten Bereiche Wände reduzierter Dicke umfasst.

3. Element nach Anspruch 1 oder 2, **dadurch gekennzeichnet, dass** der Querträger (40) von einem rechten Abschnitt (50) und einem linken Abschnitt (60) gebildet wird, die miteinander durch Einpassen verbunden sind.

4. Element nach Anspruch 3, **dadurch gekennzeichnet, dass** der rechte Abschnitt (50) einen rechten transversalen Träger (51) umfasst, der an der Karosserie durch ein rechtes Ende (52) befestigt ist, und einen männlichen Endabschnitt (53), der mit einem Ende des rechten Trägers (51) verbunden ist und dem rechten Ende (52) gegenüberliegt, und der linke Abschnitt (60) einen linken transversalen Träger (61) umfasst, der an der Karosserie durch ein linkes Ende (62) befestigt ist, und einen weiblichen Endabschnitt (63), der mit dem linken Träger (61) durch ein dem linken Ende (62) gegenüberliegendes Ende verbunden ist, wobei der männliche Endabschnitt (53) in den weiblichen Endabschnitt (63) eingreift.

5. Element nach Anspruch 4, **dadurch gekennzeichnet, dass** der männliche Endabschnitt (53) in dem weiblichen Endabschnitt (63) durch einen Clip verriegelt ist.

6. Element nach Anspruch 4 oder 5, **dadurch gekennzeichnet, dass** sich die Sollbruchstelle (41) an der Schnittstelle zwischen dem männlichen Endabschnitt (53) und dem rechten Träger (51) befindet.

7. Element nach einem der Ansprüche 4 bis 6, **dadurch gekennzeichnet, dass** der männliche Endabschnitt (53) hohl ist, wobei die Sollbruchstelle (41) eine periphere Nut (411) umfasst, die in den männlichen Endabschnitt eingearbeitet ist.

8. Element nach einem der Ansprüche 4 bis 7, **dadurch gekennzeichnet, dass** der linke und der rechte Träger (61, 51) jeweils aus einem transversalen U-förmigen Profil und Versteifungen (73) bestehen, die innerhalb des U angeordnet sind.

9. Element nach Anspruch 8, **dadurch gekennzeichnet, dass** der rechte und der linke Abschnitt (50, 60) jeweils einen Vorsprung (74) aufweisen, der nach vorn vorspringt und das Windlaufgitter (30) abstützt.

10. Element nach einem der Ansprüche 4 bis 9, **dadurch gekennzeichnet, dass** der männliche und der weibliche Endabschnitt (53, 63) trapezförmige Segmente senkrecht zur transversalen Richtung aufweisen.
